# EUROPEAN PATENT APPLICATION

(11) **EP 4 840 634 A1**
(43) Date of publication of application: **18.11.2026**
(21) Application number: 26173560.9
(22) Date of filing: 21.04.2026
(51) Int. Cl.: B33Y 10/00, B29C 64/00, B33Y 30/00, B41J 2/44, B41M 5/025, B41M 5/382

(54) **IMAGE FORMING METHOD AND IMAGE FORMING APPARATUS**

(30) Priority: 14.05.2025 JP 2025081511
(71) Applicant: ETRIA Co., Ltd., Yokohama, Kanagawa 220-0011 (JP)
(72) Inventor: KANEKO, Akihiro, Kanagawa, 220-0011 (JP); SUZUKI, Kazumi, Kanagawa, 220-0011 (JP); OGINO, Kohtaroh, Kanagawa, 220-0011 (JP)
(74) Representative: SSM Sandmair

(57) **Abstract**

An image forming method includes: applying a transfer composition (20) on a first face of a transparent substrate (40), the transfer composition (20) including: a wavelength-selective absorbing material configured to absorb light having a specific wavelength; a wavelength-selective non-absorbing material configured not to absorb the light having a specific wavelength; and a dispersion medium; irradiating, a second face opposite the first face of the transparent substrate (40), with the light (12) having the specific wavelength, to propel the transfer composition (20) from the transparent substrate (40) toward a target object (30), and to transfer the transfer composition (20) onto the target object (30); and sintering the transfer composition (20) on the target object (30), to decompose or volatilize the wavelength-selective absorbing material and the dispersion medium in the transfer composition (20), and to form, on the target object (30), an image including the wavelength-selective non-absorbing material.

## Description

### BACKGROUND

### Technical Field

The present embodiment relates to an image forming method and an image forming apparatus.

### Related Art

The laser-induced forward transfer (LIFT) method is a method in which, on a base material on which a transfer composition containing a light absorbing material is disposed (hereinafter, also referred to as a "base material"), the transfer composition is irradiated with a laser beam from the base material side, a transfer target is caused to fly, and the transfer composition is transferred to a desired position on an target object (hereinafter, also referred to as an "acceptor substrate") disposed so as to face the transfer composition.

As such LIFT method, for example, there has been proposed an image forming method capable of finely transferring a high-viscosity liquid containing a light absorbing material without scattering the high-viscosity liquid by using an optical vortex laser beam as a laser beam (refer to, for example, Japanese Patent No. 6455588).

An object of one aspect of the present embodiment is to provide an image forming method capable of transferring even a material that does not absorb light having a specific wavelength with which a transfer composition is irradiated to a target object with high definition.

### SUMMARY

One aspect of the present embodiment can provide an image forming method capable of transferring even a material that does not absorb light having a specific wavelength with which a transfer composition is irradiated to a target object with high definition.

### BRIEF DESCRIPTIONS OF DRAWINGS

A more complete appreciation of embodiments of the present disclosure and many of the attendant advantages and features thereof can be readily obtained and understood from the following detailed description with reference to the accompanying drawings, wherein:
FIG. 1A is an explanatory diagram illustrating an example of an image forming apparatus;
FIG. 1B is an explanatory diagram illustrating another example of an image forming apparatus;
FIG. 1C is an explanatory diagram illustrating another example of an image forming apparatus;
FIG. 2A is an explanatory diagram illustrating an example of an image forming apparatus obtained by adding a supply means and a target object conveyance means to the image forming apparatus illustrated in FIG. 1B;
FIG. 2B is an explanatory diagram illustrating another example of an image forming apparatus obtained by adding a supply means and a target object conveyance means to the image forming apparatus illustrated in FIG. 1B;
FIG. 3A is an explanatory diagram illustrating an example of the image forming apparatus illustrated in FIG. 2A to which a fixing means is added;
FIG. 3B is an explanatory diagram illustrating another example of the image forming apparatus illustrated in FIG. 2A to which a fixing means is added;
FIG. 3C is an explanatory diagram illustrating another example of the image forming apparatus illustrated in FIG. 2A to which a fixing means is added;
FIG. 4A is an explanatory diagram illustrating an example of an image forming apparatus;
FIG. 4B is an explanatory diagram illustrating an example of a manufacturing apparatus of a three-dimensional formed object;
FIG. 5 is an explanatory diagram illustrating another example of an image forming apparatus; and
FIG. 6 is a schematic view of a laser emission apparatus having an optical vortex laser beam used in Examples and Comparative Examples.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION OF EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### Image Forming Method and Image Forming Apparatus

An image forming method according to one embodiment of the present embodiment includes causing a transfer composition to fly (hereinafter, also referred to as a "flying step"), transferring the transfer composition caused to fly to a target object (hereinafter, also referred to as a "transfer step"), and sintering the transferred transfer composition (hereinafter, also referred to as a "sintering step"), and further includes other steps as necessary.

The image forming method according to one embodiment of the present embodiment is an image forming method by a laser-induced forward transfer (LIFT) method.

In the image forming method according to one embodiment of the present embodiment, the "transfer composition" is sometimes referred to as a "donor".

In the image forming method according to one embodiment of the present embodiment, the "transfer composition" disposed on a base material and applied in a form of a liquid thin film is sometimes referred to as a "donor thin film" or a "transfer layer".

An image forming apparatus according to one embodiment of the present embodiment includes a means of causing a transfer composition to fly (hereinafter, also referred to as a "flying means"), a means of transferring the transfer composition caused to fly to a target object (hereinafter, also referred to as a "transfer means"), and a means of sintering the transferred transfer composition (hereinafter, also referred to as a "sintering means"), and further includes other means as necessary. The flying step is referred to also as "propelling step".

The image forming method according to one embodiment of the present embodiment can be more suitably performed by the image forming apparatus according to one embodiment of the present embodiment, the flying step can be performed by the flying means, the transfer step can be performed by the transfer means, the sintering step can be performed by the sintering means, and other steps can be performed by other means.

In the related art, there is no mention of a method of directly printing and forming an image without using a light absorbing layer other than a transfer material layer by a LIFT method using a material having no absorption at a specific wavelength, and it has been difficult to form an image.

### Flying Step and Flying Means

The flying step is a step of irradiating a face of a transparent substrate on a side opposite to a side on which a transfer composition is disposed with light having a specific wavelength in the transparent substrate on a face of which the transfer composition containing a wavelength-selective absorbing material that absorbs the light having a specific wavelength, a wavelength-selective non-absorbing material that does not absorb the light having a specific wavelength, and a dispersion medium is disposed, thereby causing the transfer composition to fly.

In one embodiment of the present embodiment, "fly" means that at least a part of the transfer composition is detached from the base material and travels in the air or moves in the air. In contrast, "scatter" means to fly and scatter.

### Transparent substrate

The transparent substrate is a base material on which the transfer composition is disposed, and is a base material that transmits the light having a specific wavelength in order to irradiate the transfer composition on the face with the light having a specific wavelength. Here, transmitting light means having a certain transmittance. The transmittance is not limited in particular, and can be appropriately selected according to a purpose, but is preferably 70% or higher, and is more preferably 85% or higher. When the transmittance is 70% or higher, since energy of light absorbed by the base material is less likely to be converted into heat, a change such as drying or melting is less likely to be applied to the transfer composition, and energy applied to the transfer composition is less likely to decrease, so that it is advantageous in that a variation in position at which the transfer composition is caused to fly is applied is less likely to occur.

As a measuring method of the transmittance, for example, the transmittance can be measured using a spectrophotometer (V-660DS, manufactured by JASCO Corporation).

A shape of the transparent substrate is not particularly limited as long as the transfer composition can be disposed thereon and can be appropriately selected according to a purpose, and examples thereof include a substrate.

### Substrate

A shape, a structure, a size, and a material of the substrate are not limited in particular, and may be appropriately selected according to a purpose.

The shape of the substrate is not limited in particular and can be appropriately selected according to a purpose, and examples thereof include a flat plate shape, a cylindrical shape of a perfect circle or an ellipse, a face obtained by cutting out a part of a cylindrical shape, and an endless belt shape. Among them, it is preferable that the substrate has a cylindrical shape and includes a supply means that supplies the transfer composition to a face of the substrate rotating in a circumferential direction. When the transfer composition is carried on the face of the cylindrical substrate, this can be supplied without depending on a dimension of the target object in an outer circumferential direction. In this case, the flying means is disposed inside the cylindrical shape, and a laser beam can be emitted from the inside toward the outer periphery and can be continuously emitted with the substrate rotating in the circumferential direction.

Examples of the flat plate shaped substrate include a slide glass.

The structure of the substrate is not particularly limited and may be appropriately selected depending on a purpose.

The size of the substrate is not particularly limited, and can be appropriately selected according to a purpose, but it is preferable to set to a dimension corresponding to a width of the target object to which the transfer composition is applied.

The material of the substrate is not particularly limited as long as this transmits light, and can be appropriately selected according to a purpose, but inorganic materials such as various glasses containing silicon oxide as a main component, and organic materials such as transparent heat-resistant plastics and elastomers are preferable from the viewpoint of transmittance and heat resistance.

Face roughness Ra of the substrate is not particularly limited, and can be appropriately selected according to a purpose, but it is preferable that this be 1 µm or less for both the face and a back face from the viewpoint of suppressing refractive scattering of the laser beam and preventing reduction of the energy applied to the transfer composition. When the face roughness Ra is within a preferable range, it is advantageous in that a variation in average thickness of the transfer composition applied to the target object to which the transfer composition is applied can be suppressed, and a desired amount of the transfer composition can be applied.

The face roughness Ra can be measured according to JIS B0601, and for example, this can be measured using a stylus-type face shape measuring device (Dektak150, manufactured by Bruker AXS Corporation).

### Transfer composition

The transfer composition contains the material that does not absorb the light having a specific wavelength (hereinafter, also referred to as the "wavelength-selective non-absorbing material"), the material that absorbs the light having a specific wavelength (hereinafter, also referred to as the "wavelength-selective absorbing material"), and the dispersion medium, and further contains other components as necessary.

Complex viscosity of the transfer composition is not particularly limited, and can be appropriately selected according to a purpose, but is preferably 1 mPa·s or more and 20,000 mPa·s or less. When the complex viscosity is 1 mPa·s or more, a liquid thin film can be formed on the transparent substrate. When the complex viscosity is 20,000 mPa·s or less, it is easy to cause the transfer composition to fly to a desired position, so that an image can be formed with high definition.

The complex viscosity can be measured on the basis of the following conditions by a stress control method in which an applied stress is changed and a strain amount generated at that time is measured using a dynamic viscoelasticity measuring device.

### Measurement Conditions

·Device name: Rheometer, HAAKE RheoStress 600, manufactured by Thermo Fisher Scientific
·Temperature: 25°C
·Shear stress: 200 Pa

### Wavelength-selective non-absorbing material

The wavelength-selective non-absorbing material is a material that does not absorb the light having a specific wavelength. The light having a specific wavelength is light with which the transfer composition is irradiated at the flying/transfer step.

Not absorbing the light having a specific wavelength means that an absorption rate of the light having a specific wavelength is 20% or lower. The absorption rate of light can be measured by, for example, a known method using a photoanalytical instrument (spectrophotometer).

As the wavelength-selective non-absorbing material, absorbance with respect to the wavelength of the laser beam with which this is irradiated is preferably less than 0.1, and more preferably less than 0.05.

The wavelength-selective non-absorbing material is not particularly limited as long as the absorbance with respect to the wavelength of the laser beam with which this is irradiated is less than 0.1 and can be appropriately selected according to a purpose, and examples thereof include an inorganic material.

The form, size, and material of the inorganic material are not particularly limited, and can be appropriately selected according to a purpose.

Examples of the form of the inorganic material include a solid and a powder. The term "solid" means one that maintains its shape at 25°C regardless of a shape of a container.

Examples of the inorganic material include manganese ferrite, iron ferrite, magnesium ferrite, strontium ferrite, triiron tetraoxide, titanium oxide, zinc sulfide, black iron oxide, black copper oxide, black chromium oxide, yellow iron oxide, yellow nickel titanium, cadmium sulfide, selenium, cadmium selenide, lead chromate, lead molybdate, red iron oxide, cobalt oxide, hydrous chromium oxide, chromium oxide, gold, antimony lead, nickel oxide, manganese oxide, neodymium oxide, erbium oxide, cerium oxide, aluminum oxide, aluminum, bronze, mica, carbon black, carbon, zeolite, calcium carbonate, barium sulfate, zinc oxide, antimony trioxide, cadmium mercury sulfide, Prussian blue, and ultramarine blue.

They may be used singly or in combination of two or more kinds thereof.

A median diameter (D₅₀) of the inorganic material is preferably 50 nm or larger and 500 nm or smaller, and more preferably 50 nm or larger and 240 nm or smaller.

The median diameter (D₅₀) is measured using, for example, a scanning electron microscope (SU8200 series, manufactured by Hitachi High-Technologies Corporation). The obtained image can be binarized with image processing software A-Zou (manufactured by Asahi Kasei Engineering Co., Ltd.) to calculate the median diameter (D₅₀). Alternatively, for example, the measurement is performed using a transmission electron microscope (JEM-2100, manufactured by JEOL Ltd.). As an observation sample, an ethanol dispersion liquid containing 0.4 mass% of inorganic material is prepared and dispersed with an ultrasonic cleaner for about 1 hour, and measurement is performed using a collodion membrane-attached mesh (manufactured by Nisshin EM Inc.). The obtained image can be binarized with image processing software A-Zou (manufactured by Asahi Kasei Engineering Co., Ltd.) to calculate the median diameter (D₅₀).

### Wavelength-selective absorbing material

The wavelength-selective absorbing material is a material that absorbs the light having a specific wavelength. The light having a specific wavelength is light with which the transfer composition is irradiated at the flying/transfer step.

Absorbing the light having a specific wavelength means that the absorption rate of the light having a specific wavelength is 80% or higher. The absorption rate of light can be measured by, for example, a known method using a photoanalytical instrument (spectrophotometer).

The wavelength-selective absorbing material is a material that is decomposed or volatilized by the sintering step described later. Decomposition temperature or volatilization temperature of the wavelength-selective absorbing material is preferably 1,000°C or lower, more preferably 500°C or lower, and particularly preferably 300°C or lower. When the decomposition temperature or the volatilization temperature of the wavelength-selective absorbing material is 1,000°C or lower, the wavelength-selective absorbing material is decomposed or volatilized by sintering the transfer composition after being transferred to the target object, and mixing of the wavelength-selective absorbing material in the formed image can be suppressed. Therefore, a high-definition image can be formed.

In the wavelength-selective absorbing material, the absorbance with respect to the wavelength of the laser beam with which this is irradiated is preferably more than 1, and more preferably more than 2. When the absorbance with respect to the wavelength of the light of the wavelength-selective absorbing material is more than 2, it is advantageous in that energy efficiency can be increased.

As the wavelength-selective absorbing material, a form, a size, and a material thereof are not particularly limited as long as this absorbs the light having a predetermined wavelength, and can be appropriately selected according to a purpose.

Examples of the form of the wavelength-selective absorbing material include a solid and a powder. The term "solid" means one that maintains its shape at 25°C regardless of a shape of a container.

Examples of the wavelength-selective absorbing material include carbon, carbon black, a silicon resin, an ABS resin, and an ammonium salt. They may be used singly or in combination of two or more kinds thereof. Among them, an ammonium salt is preferable from the viewpoint of excellent appearance of an image after sintering.

A median diameter (D₅₀) of the inorganic material is preferably 50 nm or larger and 500 nm or smaller, and more preferably 50 nm or larger and 240 nm or smaller.

The median diameter (D₅₀) is measured using, for example, a scanning electron microscope (SU8200 series, manufactured by Hitachi High-Technologies Corporation). The obtained image can be binarized with image processing software A-Zou (manufactured by Asahi Kasei Engineering Co., Ltd.) to calculate the median diameter (D₅₀). Alternatively, for example, the measurement is performed using a transmission electron microscope (JEM-2100, manufactured by JEOL Ltd.). As an observation sample, an ethanol dispersion liquid containing 0.4 mass% of inorganic material is prepared and dispersed with an ultrasonic cleaner for about 1 hour, and measurement is performed using a collodion membrane-attached mesh (manufactured by Nisshin EM Inc.). The obtained image can be binarized with image processing software A-Zou (manufactured by Asahi Kasei Engineering Co., Ltd.) to calculate the median diameter (D₅₀).

A content of the wavelength-selective absorbing material is not particularly limited, and can be appropriately selected according to a purpose, but is preferably 0.5 mass% or less with respect to the total amount of the transfer composition, more preferably 0.2 mass% or less from the viewpoint of excellent appearance of an image after sintering, and particularly preferably 0.1 mass% or less.

### Dispersion Medium

The dispersion medium is not particularly limited as long as this can disperse the wavelength-selective non-absorbing material and the wavelength-selective absorbing material and can be appropriately selected according to a purpose, and examples thereof include water, an organic solvent, wax, and resin varnish. They may be used singly or in combination of two or more kinds thereof.

Examples of the water include pure water such as ion-exchanged water, ultrafiltrated water, reverse osmosis water, and distilled water, or ultrapure water.

The organic solvent is not particularly limited and can be appropriately selected according to a purpose, and examples thereof include glycerol, ethanol, and acetone.

The wax is not particularly limited, and can be appropriately selected according to a purpose, and examples thereof include a hydrocarbon-based wax, an ester wax, and a ketone wax.

The resin varnish is not particularly limited and can be appropriately selected according to a purpose, and examples thereof include acryl-based, polyester-based, styrene-based, polyurethane-based, alkyd-based, epoxy-based, amber, and rosin-based resin varnishes.

The dispersion medium may contain a surfactant from the viewpoint of dispersibility of the wavelength-selective absorbing material.

The surfactant is not limited in particular and can be appropriately selected according to a purpose, and examples thereof include an anionic surfactant, a cationic surfactant, a nonionic surfactant, and an amphoteric surfactant.

Examples of the anionic surfactant include a fatty acid soap, an alkyl succinate salt, an alkyl benzene sulfonate sodium salt, an alkyl naphthalene sulfonate sodium salt, an alkyl sulfate ester sodium salt, a polyoxyethylene alkyl ether sulfate sodium salt, a dialkyl sulfosuccinate sodium salt, an alkyl phosphate sodium salt, and a polycarboxylic acid type polymer surfactant. Examples thereof include not only the above-described sodium salt but also any metal salt and ammonium salt.

Examples of the cationic surfactant include alkyltrimethylammonium chloride and alkyldimethylbenzylammonium chloride.

Examples of the nonionic surfactant include polyoxyethylene alkyl ether, polyoxyethylene alkyl allyl ether, and sorbitan fatty acid ester.

Examples of the amphoteric surfactant include alkyl betaine and amide betaine.

### Other Components

Examples of other components include a colorant, a dispersant, a heat stabilizer, an antioxidant, a reduction inhibitor, an antiseptic agent, a pH adjuster, an antifoaming agent, a wetting agent, and a penetrant.

The transfer composition is a liquid, the viscosity of the liquid transfer composition is not particularly limited, and can be appropriately selected according to a purpose.

The viscosity can be measured under an environment of 25°C using, for example, a rotational viscometer (VISCOMATE VM-150III, manufactured by Toki Sangyo Co., Ltd.).

The shape of the transfer composition disposed on the transparent substrate is not particularly limited and can be appropriately selected according to a purpose, and examples thereof include a layered shape and a film shape.

The transfer composition may integrally (continuously) form a layer (film) on the base material, or may intermittently form a layer (film). For example, the transfer composition may be formed as a liquid thin film on the face of the transparent substrate.

The average thickness of the transfer composition (transfer layer) is not particularly limited, and can be appropriately selected according to a purpose. In a case where the transfer layer at 25°C is a liquid, the average thickness is preferably 10 µm or more, preferably 10 µm or more and 50 µm or less, and still preferably 20 µm or more and 50 µm or less. When the average thickness of the transfer layer is 10 µm or more in a case where the transfer layer at 25°C is a liquid, scattering of the transfer composition can be suppressed when this is irradiated with light.

When the average thickness of the transfer layer is 10 µm or more in a case where the transfer layer at 25°C is a liquid, in a case where the transfer layer is continuously supplied in a layered shape, the strength of the layer on the substrate can be secured even when the transfer layer is continuously caused to fly, which is preferable in that the transfer composition can be continuously caused to fly.

In a case where the transfer layer at 25°C is a liquid, when the average thickness of the transfer layer is 50 µm or less, the energy of light necessary for causing the transfer composition to fly does not become too large. Therefore, in particular, in a case where the wavelength-selective absorbing material is an organic substance, it is advantageous in that deterioration or decomposition hardly occurs.

Depending on an applying method, it is also possible to supply as a layer maintaining a certain pattern.

The average thickness of the transfer layer is not particularly limited, and can be appropriately selected according to the purpose. However, in a case where the transfer layer at 25°C is a solid, the average thickness is preferably 40 µm or less, preferably 0.2 µm or more and 20 µm or less, and still preferably 5 µm or more and 18 µm or less. In a case where the transfer layer at 25°C is a solid, when the average thickness of the transfer layer is 40 µm or less, transfer can be performed with relatively weak light energy, so that damage to the wavelength-selective absorbing material can be suppressed.

A measuring method of the average thickness of the transfer layer is not particularly limited and can be appropriately selected according to a purpose, and examples thereof include a method in which an optional plurality of points is selected for the transfer layer, and the average of the thicknesses of the plurality of points is calculated. As the average, the average of the thicknesses at 5 points is preferable, the average of the thicknesses at 10 points is more preferable, and the average of the thicknesses at 20 points is particularly preferable.

A measuring instrument of the average thickness is not particularly limited and can be appropriately selected according to a purpose, and examples thereof include a non-contact or contact method such as a laser displacement meter or a micrometer.

The flying means irradiates a face of a transparent substrate on a side opposite to a side on which a transfer composition is disposed with light having a specific wavelength in the transparent substrate on a face of which the transfer composition containing a wavelength-selective absorbing material that absorbs the light having a specific wavelength, a wavelength-selective non-absorbing material that does not absorb the light having a specific wavelength, and a dispersion medium is disposed, thereby causing the transfer composition to fly and transferring the transfer composition to a target. In other words, the transfer composition is caused to fly in a light emission direction by irradiating the face of the substrate on the side opposite to the side on which the transfer composition is disposed with light in the transparent substrate on the face of which the transfer composition is disposed.

The flying means includes a light source and a wavelength conversion unit, and further includes other members as necessary.

### Light Source

The light source is not limited in particular and may be appropriately selected depending on a purpose.

In the flying means, the transfer composition can be irradiated with the laser beam from the substrate side of the base material and the transfer composition can be caused to fly. By using the laser beam, it is possible to make the transfer composition caused to fly less likely to be scattered.

Examples of the light source include a solid laser that generates the laser beam, a gas laser, and a semiconductor laser, and a light source capable of performing pulse oscillation is preferable.

Examples of the solid laser include a YAG laser and a titanium sapphire laser.

Examples of the gas laser include an argon laser, a helium neon laser, and a carbon dioxide laser.

Among them, the semiconductor laser having an output of about 30 mW is preferable from the viewpoint of downsizing of the device and cost reduction. In the present embodiment, a Nd: YAG laser is used.

The wavelength of the laser beam is not particularly limited, and can be appropriately selected according to a purpose, but is preferably 300 nm or longer and 11 µm or shorter, and more preferably 350 nm or longer and 1100 nm or shorter.

The beam diameter of the laser beam is not particularly limited, and can be appropriately selected according to a purpose, but is preferably 10 µm or larger and 10 mm or smaller, and more preferably 10 µm or larger and 1 mm or smaller.

A pulse width of the laser beam is not particularly limited, and can be appropriately selected according to a purpose, but is preferably 2 nanoseconds or more and 100 nanoseconds or less, and more preferably 2 nanoseconds or more and 10 nanoseconds or less.

A pulse frequency of the laser beam is not particularly limited, and can be appropriately selected according to a purpose, but is preferably 10 Hz or higher and 200 Hz or lower, and more preferably 20 Hz or higher and 100 Hz or lower.

An intensity distribution of the laser beam is not particularly limited and can be appropriately selected according to a purpose, and examples thereof include a flat top beam (top hat beam), a Gaussian beam, an inverse Gaussian beam, a doughnut, and a multi-focus.

### Other Members

Other members are not particularly limited and can be appropriately selected according to a purpose, and examples thereof include a beam diameter changing member, a beam wavelength changing element, and an output adjusting unit.

### Beam Diameter Changing Member

The beam diameter changing member is not particularly limited as long as the beam diameter of the laser beam can be changed and can be appropriately selected according to a purpose, and examples thereof include a condenser lens.

The beam diameter (emission diameter) of the laser beam is not particularly limited, and can be appropriately selected according to a purpose, but is preferably 100 µm or smaller. The emission diameter of an optical vortex laser beam is preferably 100 µm or smaller from the viewpoint of easily forming a high-resolution image.

The beam diameter can be changed by, for example, a laser spot diameter and a condenser lens.

In a case where the transfer composition is a dispersion, the beam diameter is preferably equal to or larger than a maximum value of a volume average particle diameter of the transfer composition, and more preferably three times the maximum value of the dispersion. When the beam diameter is within a more preferable range, it is advantageous in that the transfer composition can be caused to stably fly.

### Beam Wavelength Changing Element

The beam wavelength changing element is not particularly limited as long as the wavelength of the laser beam can be changed to a wavelength that can be absorbed by the wavelength-selective absorbing material in the transfer composition and can permeate through the substrate described later, and can be appropriately selected according to a purpose. Examples of the beam wavelength changing element include a KTP crystal, a BBO crystal, an LBO crystal, and a CLBO crystal.

### Output Adjusting Unit

The output adjusting unit is not particularly limited as long as the laser beam can be adjusted to an appropriate output value and can be appropriately selected according to the purpose, and examples thereof include glass.

The output value of the laser beam with which the transfer composition is irradiated is not particularly limited as long as a state in which a liquid column converging to a diameter smaller than the emission diameter can be generated while performing a rotational motion about the central axis of the emission diameter with the emission direction as an axis, or a state in which a part thereof is separated and a droplet can be generated can be implemented, and can be appropriately selected according to a purpose. Hereinafter, the "output value" is sometimes referred to as "emission energy".

The emission energy of the laser beam is preferably adjusted appropriately because an appropriate value varies depending on the viscosity and film thickness of the transfer composition. Specifically, the emission energy is more preferably 100 µJ/dot or less, and still more preferably 60 µJ/dot or less. When the emission energy of the laser beam is 60 µJ/dot or less, it is advantageous in that it is easy to implement a state in which a liquid column converging to a diameter smaller than the emission diameter can be generated while performing a rotational motion about the central axis of the emission diameter with the emission direction as an axis, or a state in which a part thereof is separated and a droplet can be generated.

### Transfer Step and Transfer Means

The transfer step is a step of transferring the transfer composition caused to fly to the target object.

The transfer means is a means of transferring the transfer composition caused to fly to the target object.

The transfer step is suitably performed by the transfer means.

In one embodiment of the present embodiment, "transfer" has substantially the same meaning as "application" or "adhesion".

The transfer means is not particularly limited and can be appropriately selected according to a purpose, and examples thereof include a means including a mechanism for bringing the liquid column or droplet of the transfer composition into contact with the target object. Specifically, examples of the transfer means include a mechanism for adjusting a gap between the target object and the transfer composition, and a mechanism for conveying the target object.

### Target object

The target object is not particularly limited as long as the liquid column or droplet generated from the transfer composition can come into contact with the same and can be appropriately selected according to a purpose, and examples thereof include a recording medium, an intermediate transfer belt, and a formed object supporting substrate for forming a three-dimensional formed object, which are conventionally used in the image forming apparatus. In the present specification, the target object is sometimes referred to as a transferred medium.

The recording medium is not particularly limited and can be appropriately selected according to a purpose, and examples thereof include coated paper, high-quality paper, a film, cloth, and fiber.

The gap (gap, distance) between the target object and the transfer composition is not particularly limited as long as the target object and the transfer composition are not brought into contact with each other, and can be appropriately selected according to the purpose, but is preferably 0.05 mm or larger and 5 mm or smaller, more preferably 0.10 mm or larger and 1 mm or smaller, and particularly preferably 0.10 mm or larger and 0.50 mm or smaller. When the gap between the target object and the transfer composition is within a preferable range, it is advantageous that the accuracy of an applying position of the transfer composition to the target object is less likely to decrease. By not bringing the target object into contact with the transfer composition, the transfer composition can be applied to the target object regardless of the wavelength-selective absorbing material and the composition of the target object.

The gap is preferably kept constant by, for example, a position control means that keeps the position of the target object constant. In this case, it is preferable to dispose each part in consideration of a positional variation of the transfer composition and the target object and a variation in average thickness.

The average diameter (average dot diameter) of the transfer composition applied to the target object is not particularly limited, and can be appropriately selected according to a purpose. For example, the average diameter is preferably 100 µm or smaller from the viewpoint of further improving the resolution of the image to be formed and the three-dimensional formed object.

The average dot diameter can be obtained, for example, by acquiring a dot image of the transfer composition with a microscope, detecting a dot region from image brightness information, calculating the area of each dot from the number of pixels of the detected dot region, taking the diameter when converted into a circle as the dot diameter, and averaging the dot diameters.

A value of the variation in the average diameter (dot diameter) of the transfer composition applied to the target object is preferably 10% or smaller, and more preferably 6% or smaller. By setting the value of the variation in the average diameter of the transfer composition applied to the target object to the above preferable range, the accuracy when forming an image or a three-dimensional formed object can be further improved.

For example, by acquiring a dot image of the transfer composition with a microscope and detecting a dot region from image brightness information, calculating the area of each dot from the number of pixels of the detected dot region and making the diameter when this is converted into a circle the dot diameter, and the value of the variation in the average diameter of the transfer composition applied to the target object can be obtained by calculating from the average particle diameter and the standard deviation of the particle diameter distribution of each dot.

The value of variation in position (dot position) of the transfer composition applied to the target object is preferably 10 µm or smaller, and more preferably 5 µm or smaller. By setting the value of the variation in position of the transfer composition applied to the target object to the above preferable range, the accuracy when forming an image or a three-dimensional formed object can be further improved. The value of the variation in position of the transfer composition applied to the target object can be, for example, a value of the variation in position of each transfer composition in a direction orthogonal to a row of dots in a case where the dots of the transfer composition are applied in one row.

For example, this can be obtained by acquiring a dot image of the transfer composition with a microscope and detecting a dot region from image brightness information, calculating a barycentric coordinate of each detected dot region, and calculating a deviation of each barycenter from an approximate straight line by a least squares method.

The average thickness of the transfer composition applied to the target object is not particularly limited, and can be appropriately selected according to a purpose, but is preferably 100 µm or less. When the average thickness of the transfer composition applied to the target object is 100 µm or less, energy for causing the transfer composition to fly can be reduced, which is advantageous in durability of the transfer composition and advantageous in that decomposition of the composition in a case where the wavelength-selective absorbing material is an organic substance is less likely to occur. The average thickness of the transfer composition applied to the target object can be appropriately selected according to the recording medium and purpose.

### Sintering Step and Sintering Means

A sintering step is a step of sintering the transferred transfer composition and decomposing or volatilizing the wavelength-selective absorbing material and the dispersion medium to form an image containing the wavelength-selective non-absorbing material.

The sintering means is a means of sintering the transferred transfer composition and decomposing or volatilizing the wavelength-selective absorbing material and the dispersion medium to form an image containing the wavelength-selective non-absorbing material.

The sintering step is suitably performed by the sintering means.

Sintering temperature is not particularly limited as long as the wavelength-selective absorbing material and the dispersion medium can be decomposed or volatilized, can be appropriately selected according to a purpose, can be set from decomposition/volatilization temperature of the wavelength-selective absorbing material, and can be set within +100°C of the decomposition/volatilization temperature of the wavelength-selective absorbing material. For example, the temperature is preferably 300°C or higher, more preferably 500°C or higher, and particularly preferably 1,000°C or higher. As a result, the wavelength-selective absorbing material and the dispersion medium are decomposed or volatilized, and mixing of the wavelength-selective absorbing material and the dispersion medium in the formed image can be suppressed. Therefore, a high-definition image can be formed.

The sintering means is not particularly limited as long as the transfer composition can be heated and sintered, and examples thereof include an electric furnace and a laser.

### Other Steps and Other Means

Examples of other steps include a supply step, an optical scanning step, and a control step.

Examples of other means include a supply means, an optical scanning means, and a control means.

### Supply Step and Supply Means

The supply step is not particularly limited as long as this is a step of supplying the transfer composition to the optical path between the flying means and the target object and can be appropriately selected according to the purpose, and can be suitably performed using, for example, the supply means.

The supply means is not particularly limited as long as this is a means of supplying the transfer composition to the optical path between the flying means and the target object, and can be appropriately selected according to a purpose.

Examples of the supply means include a cylindrical substrate. In a case where the cylindrical substrate is used, the cylindrical substrate may be disposed on the optical path, and the transfer composition may be supplied to the base material via the cylindrical substrate.

More specifically, in a case where the transfer composition is a liquid and the transfer composition is supplied to the base material, it is preferable to provide a supply roller and a regulating blade as the supply means because the transfer composition can be supplied to the face of the substrate at a constant average thickness with a very simple configuration.

In this case, the supply roller, with the face partially immersed in a storage tank that stores the transfer composition, rotates while carrying the transfer composition on the face, and abuts the base material to supply the transfer composition. The regulating blade is disposed on a downstream side of the storage tank in a rotation direction of the supply roller, regulates the transfer composition carried by the supply roller to make the average thickness uniform, and stabilizes the amount of the transfer composition caused to fly. By reducing the average thickness of the transfer composition to be supplied, the amount of the transfer composition caused to fly can be reduced, so that the transfer composition can be applied to the target object as minute dots with suppressed scattering, and a dot gain with thick halftone dots can be suppressed. The regulating blade may be disposed on a downstream side of the supply roller in the rotation direction of the supply roller.

In a case where the transfer composition has high viscosity, the material of the supply roller preferably includes at least an elastic face from the viewpoint of securing contact with the base material. In a case where the transfer composition has relatively low viscosity, examples of the supply roller include a gravure roll, a micro-gravure roll, and a forward roll used in precision wet coating.

As the supply means not provided with the supply roller, a layer of the transfer composition may be formed on the face of the base material by bringing the base material into direct contact with the transfer composition in the storage tank and then scraping off an excessive transfer composition with a wire bar.

The storage tank may be provided separately from the supply means, and the transfer composition may be supplied to the supply means with a hose.

### Optical Scanning Step and Optical Scanning Means

The optical scanning step is not particularly limited as long as this is a step of scanning the transfer composition with a laser beam and can be appropriately selected according to a purpose, and can be suitably performed using, for example, the optical scanning means.

The optical scanning means is not particularly limited as long as this can scan the transfer composition with the laser beam, and can be appropriately selected according to a purpose. For example, the optical scanning means may include a reflecting mirror that reflects light emitted from the flying means toward the transfer composition, and a reflecting mirror driving unit that changes the angle and position of the reflecting mirror to scan the transfer composition with the optical vortex laser beam.

### Target object Scanning Step and Target object Scanning Means

The target object scanning step is not particularly limited as long as this is a step capable of scanning the position of the target object and controlling a landing position of the flying transfer composition on the target object and can be appropriately selected according to a purpose, and can be suitably performed using, for example, the target object scanning means.

The target object scanning means is not particularly limited as long as the position of the target object can be scanned, and can be appropriately selected according to a purpose. For example, a target object driving unit, which places the target object on an XY plane movable stage driven by a stepping motor and moves the target object to scan the landing position of the flying transfer composition, may be included.

### Control Step

The control step is a step of controlling each step, and can be suitably performed by the control means. The control means is not particularly limited as long as the movement of each means can be controlled, and can be appropriately selected according to a purpose. Examples of the control means include devices such as a sequencer and a computer.

Next, an example of the image forming apparatus according to one embodiment of the present embodiment will be described referring to the drawings.

The number, position, and shape of members of the image forming apparatus according to one embodiment of the present embodiment are not limited to the number, position, and shape of the present embodiment, and can be set to a number, position, and shape preferable for carrying out the present embodiment.

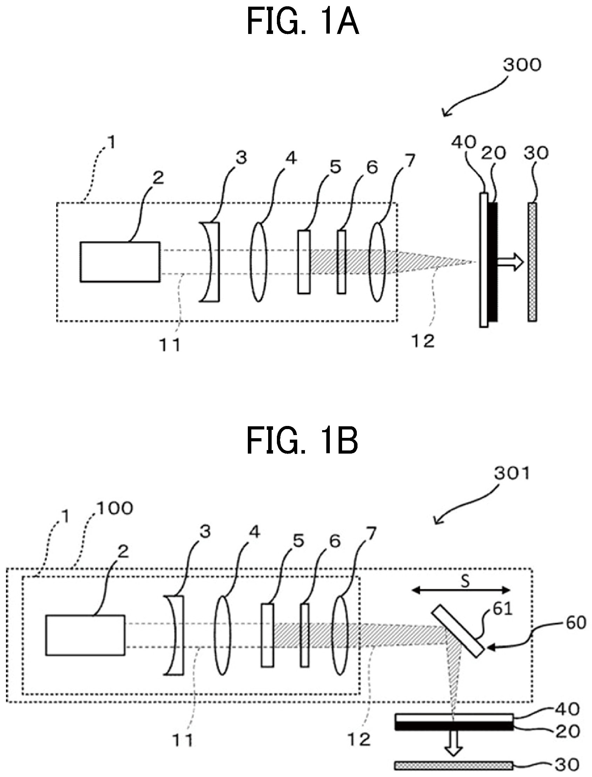

FIG. 1A is an explanatory diagram illustrating an example of the image forming apparatus according to one embodiment of the present embodiment.

In FIG. 1A, an image forming apparatus 300 includes a flying means 1, a transfer composition (transfer layer) 20, a target object 30, and a base material 40. The base material 40 is included on an upper face on a side opposite to the base material 40 of the transfer layer 20.

The image forming apparatus 300 irradiates the transfer layer 20 carried by the base material 40 with a laser beam 11 by the flying means 1, and causes the transfer layer 20 to fly in the emission direction by energy of the laser beam 11. In FIG. 1A, the target object 30 is a target to which the transfer layer 20 caused to fly is applied. The transfer layer 20 can be applied to the target object 30 by disposing the target object 30 to face the transfer layer 20.

The flying means 1 includes a laser light source 2, beam diameter changing members 3 and 7, a beam wavelength changing member 4, an optical vortex converting unit 5, and a wavelength converting unit 6.

The laser light source 2 is, for example, a titanium sapphire laser, generates a pulse-oscillated laser beam 11, and irradiates the beam diameter changing member 3 with the laser beam.

The beam diameter changing member 3 is, for example, a condenser lens and is disposed downstream of the laser light source 2 in the optical path of the laser beam 11 generated by the laser light source 2, and changes the diameter of the laser beam 11.

The beam wavelength changing member 4 is, for example, a KTP crystal and is disposed downstream of the beam diameter changing member 3 in the optical path of the laser beam 11, and changes the wavelength of the laser beam 11 to a wavelength that can be absorbed by the transfer layer 20.

The optical vortex converting unit 5 is, for example, a spiral phase plate and is disposed downstream of the beam wavelength changing member 4 in the optical path of the laser beam 11, and converts the laser beam 11 into an optical vortex laser beam 12.

The wavelength converting unit 6 is, for example, a 1/4 wave plate, and applies circularly polarized light to the optical vortex laser beam 12.

The transfer layer 20 is irradiated with the optical vortex laser beam 12 from the flying means 1 and flies by receiving energy in a range of the diameter of the optical vortex laser beam 12. The transfer layer 20 can be applied to the target object 30 by disposing the target object 30 to face the transfer layer 20.

The flying transfer layer 20 is twisted off while converging in the vicinity of the center axis of the beam diameter by forward propulsion and a gyro effect by appropriate energy applied by the optical vortex laser beam 12, thereby being applied to the target object 30 while being suppressed from scattering to its periphery.

At that time, a flying amount of the flying transfer layer 20 is a part of the area of the transfer layer 20 irradiated with the optical vortex laser beam 12, and can be adjusted by the wavelength conversion unit 6.

FIG. 1B is an explanatory diagram illustrating another example of the image forming apparatus according to one embodiment of the present embodiment.

In FIG. 1B, an image forming apparatus 301 includes an optical scanning means 60 in addition to each means of the image forming apparatus 300 illustrated in FIG. 1A. In FIG. 1B, the base material 40 is disposed such that a major axis direction of the base material 40 is orthogonal to the emission direction of the optical vortex laser beam 12. The image forming apparatus 301 scans the base material 40 with the optical vortex laser beam 12 generated by the flying means 1 by the optical scanning means 60. As a result, the image forming apparatus 301 can irradiate any position of the base material 40 to cause the transfer composition (transfer layer) 20 to fly. As a result, the transfer layer 20 can be applied to any position of the target object 30 in a case where the target object 30 is disposed to face the transfer layer 20.

The optical scanning means 60 is disposed downstream of the flying means 1 in the optical path of the optical vortex laser beam 12, and includes a reflecting mirror 61.

The reflecting mirror 61 is movable in a scanning direction indicated by an arrow S in FIG. 1B by a reflecting mirror driving means, and reflects the optical vortex laser beam 12 to any position of the transfer layer 20.

The optical scanning means 60 may move the flying means 1 or rotate the flying means 1 to change the emission direction of the optical vortex laser beam 12, for example. Alternatively, the optical scanning means 60 may scan any position with the optical vortex laser beam 12 by using a polygon mirror as the reflecting mirror 61.

The base material 40 is disposed downstream of the optical scanning means 60 in the optical path of the optical vortex laser beam 12, and is used for the purpose of applying and securing the transfer layer 20, for example, in a case where the transfer layer 20 is a high-viscosity liquid. The base material 40 is capable of transmitting light, and carries the transfer layer 20 on a face opposite to a face irradiated with the optical vortex laser beam 12.

The flying amount of the transfer layer 20 can be stabilized by controlling the average thickness of the transfer layer 20 on which the layer is formed to be constant at a stage where the transfer layer 20 is carried by the base material 40.

A combination of the flying means 1 and the optical scanning means 60 is referred to as a laser beam emitting unit 100.

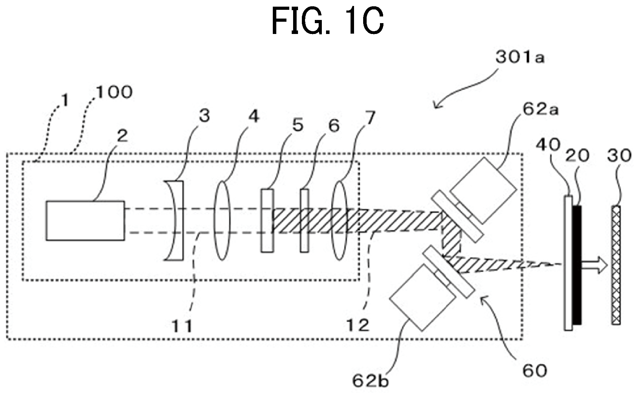

FIG. 1C is an explanatory diagram illustrating another example of the image forming apparatus according to one embodiment of the present embodiment.

In FIG. 1C, an image forming apparatus 301a includes galvano scanners (galvano mirrors) 62a and 62b as the optical scanning means 60 in the image forming apparatus 301 illustrated in FIG. 1B. The galvano scanners 62a and 62b can move in independent scanning directions (two-dimensional) and reflect the optical vortex laser beam 12 to any position on the transfer layer 20.

By using the galvano scanners 62a and 62b as the optical scanning means 60, a scanning speed and scanning accuracy of the optical vortex laser beam 12 can be further improved.

In the image forming apparatus 301a, for example, an fθ lens is preferably disposed between the galvano scanner 62b and the base material 40.

The application of the image forming method and the image forming apparatus according to one embodiment of the present embodiment is not particularly limited and can be appropriately selected according to the purpose, and examples thereof include image formation, manufacture of a three-dimensional formed object, and formation of a printable circuit.

Next, an example of the image forming apparatus according to the image forming method of one embodiment of the present embodiment is described referring to the drawings.

The number, position, and shape of members of the image forming apparatus according to the image forming method of one embodiment of the present embodiment are not limited to the number, position, and shape of the present embodiment, and can be set to a number, a position, and a shape preferable for carrying out one embodiment of the present embodiment.

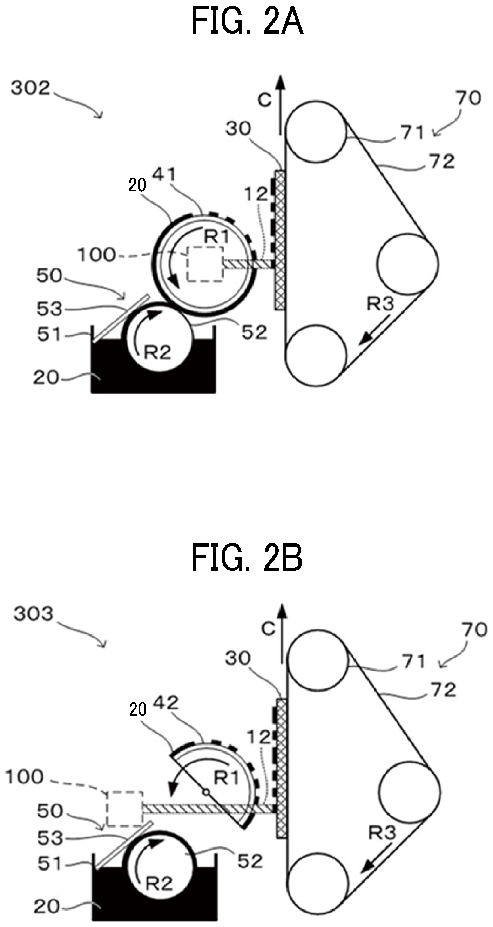

FIG. 2A is an explanatory diagram illustrating an example of the image forming apparatus to which a supply means and a target object conveyance means are added in the image forming apparatus illustrated in FIG. 1B.

In FIG. 2A, an image forming apparatus 302 includes a supply means 50 and a target object conveyance means 70 in addition to each means of the image forming apparatus 301 illustrated in FIG. 1B, and is obtained by changing a flat plate shaped base material 40 to a cylindrical carrying roller 41. A laser beam emitting unit 100 is disposed inside the carrying roller 41, and irradiates the transfer composition (transfer layer) 20 carried on an outer periphery by the carrying roller 41 with the optical vortex laser beam 12.

The supply means 50 includes a storage tank 51, a supply roller 52, and a regulating blade 53.

The storage tank 51 is disposed in the vicinity below the supply roller 52 and stores the transfer composition 20.

The supply roller 52 is disposed so as to abut the carrying roller 41, and is partially immersed in the transfer composition 20 of the storage tank 51. The supply roller 52 applies the transfer composition 20 to the face while rotating in a rotation direction indicated by an arrow R2 in FIG. 2A by a rotation driving means or following the rotation of the carrying roller 41. The applied transfer composition 20 has an average thickness made uniform by the regulating blade 53, and is supplied as a layer by being transferred to the carrying roller 41. The transfer composition 20 supplied to the face of the carrying roller 41 is continuously supplied to a position irradiated with the optical vortex laser beam 12 as the carrying roller 41 rotates.

The regulating blade 53 is disposed on an upstream side of the carrying roller 41 in the rotation direction indicated by the arrow R2 in FIG. 2A, regulates the transfer composition 20 applied to the face by the supply roller 52, and makes the average thickness of the transfer composition 20 supplied to the carrying roller 41 uniform.

The target object conveyance means 70 is disposed in the vicinity of the carrying roller 41 so that the carrying roller 41 does not come into contact with the target object 30 to be conveyed, and includes a target object conveyance roller 71 and a target object conveyance belt 72 stretched around the target object conveyance roller 71. The target object conveyance means 70 rotates the target object conveyance roller 71 by the rotation driving means, and conveys the target object 30 in the conveyance direction indicated by an arrow C in FIG. 2A by the target object conveyance belt 72.

At that time, the laser beam emitting unit 100 emits the optical vortex laser beam 12 from the inside of the carrying roller 41 according to image information and applies the transfer composition 20 to the target object 30. A two-dimensional image can be formed on the target object 30 by performing an applying operation of applying the transfer composition 20 to the target object 30 while moving the target object 30 by the target object conveyance belt 72.

The transfer composition (transfer layer) 20 that has been carried on the face of the carrying roller 41 but has not been caused to fly is accumulated as the carrying roller 41 rotates and abuts the supply roller 52, and eventually falls into the storage tank 51 and is recovered. A recovering method of the transfer composition 20 is not limited thereto, and a scraper for scraping the transfer layer 20 on the face of the carrying roller 41 may be provided.

FIG. 2B is an explanatory diagram illustrating another example of the image forming apparatus to which a supply means and a target object conveyance means are added in the image forming apparatus illustrated in FIG. 1B.

In FIG. 2B, an image forming apparatus 303 is obtained by dividing the cylindrical carrying roller 41 in the image forming apparatus 302 illustrated in FIG. 2A into two carrying units 42 in the axial direction, and changing the arrangement of the image forming apparatus 302.

The carrying unit 42 is a part of a cylindrical face, and has a shape having no face on the opposite side of the cylindrical center line. By using a carrier having no opposing face, the optical path of the optical vortex laser beam 12 can be easily secured without providing the laser beam emitting unit 100 on the cylindrical carrying roller 41, so that the apparatus can be simplified.

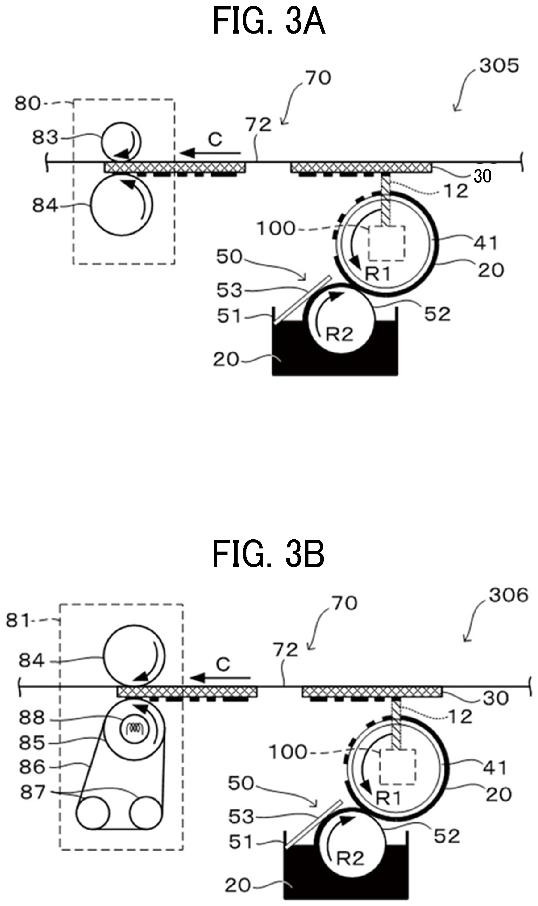

FIG. 3A is an explanatory diagram illustrating an example of the image forming apparatus illustrated in FIG. 2A to which a fixing means is added.

In FIG. 3A, an image forming apparatus 305 includes a fixing means 80 in addition to each means of the image forming apparatus 302 illustrated in FIG. 2A, and fixes and smooths the transfer layer 20 applied to the target object 30. In FIG. 2A, a position of the target object conveyance means 70 is a side face of the carrying roller 41, but in FIG. 3A, the position is above the carrying roller 41 for convenience of description.

The fixing means 80 is a pressurizing-type fixing means and is disposed on a downstream side of the carrying roller 41 in the conveyance direction indicated by an arrow C in FIG. 3A of the target object 30, and includes a pressurizing roller 83 and a counter roller 84. The fixing means 80 conveys the target object 30 to which the transfer layer 20 is applied while nipping the same, thereby pressurizing and fixing the same.

The pressurizing roller 83 is biased toward the counter roller 84 and has a face in contact with the target object 30, and pressurizes the target object 30 while nipping the same with the counter roller 84.

The counter roller 84 is disposed at a position in contact with the pressurizing roller 83, and nips the target object 30 with the pressurizing roller 83 via the target object conveyance belt 72.

For example, when the transfer composition 20 having very high viscosity of 1,000 mPa·s or more is used in the image forming apparatus 305, permeation or wetting of the transfer composition 20 to the target object 30 tends to be delayed. When the transfer composition 20 is dried as it is, the face roughness of the image becomes rough, and gloss of the image may decrease. In such a case, since the fixing means 80 can pressurize the target object 30 applied by the transfer composition 20 with the pressurizing roller 83 and press the transfer composition 20 into the target object 30 or crush the transfer composition 20, the face roughness of the target object 30 applied by the transfer composition 20 can be reduced.

FIG. 3B is an explanatory diagram illustrating another example of the image forming apparatus illustrated in FIG. 2A to which a fixing means is added.

In FIG. 3B, an image forming apparatus 306 is obtained by changing the pressurizing-type fixing means 80 in the image forming apparatus 305 illustrated in FIG. 7A to a heating and pressurizing-type fixing means 81.

The fixing means 81 is disposed on a downstream side of the carrying roller 41 in the conveyance direction indicated by an arrow C in FIG. 7B of the target object 30, and includes a heating and pressurizing roller 85, a fixing belt 86, a driven roller 87, a halogen lamp 88, and the counter roller 84. The fixing means 81 is used when a target image cannot be obtained only by pressurization in a case of using a dispersion liquid in which a material that needs to be melted is dispersed as the transfer composition 20.

The heating and pressurizing roller 85 is biased toward the counter roller 84, and heats and pressurizes the target object 30 while nipping the same with the counter roller 84 via the fixing belt 86.

The fixing belt 86 has an endless belt shape and is stretched around the heating and pressurizing roller 85 and the driven roller 87, and has a face in contact with the target object 30.

The driven roller 87 is disposed below the heating and pressurizing roller 85 and is driven in accordance with the rotation of the heating and pressurizing roller 85.

The halogen lamp 88 is disposed inside the heating and pressurizing roller 85 and generates heat for fixing the transfer layer 20 to the target object 30.

The counter roller 84 is disposed at a position abutting the fixing belt 86, and nips the target object 30 with the pressurizing roller 83 via the target object conveyance belt 72.

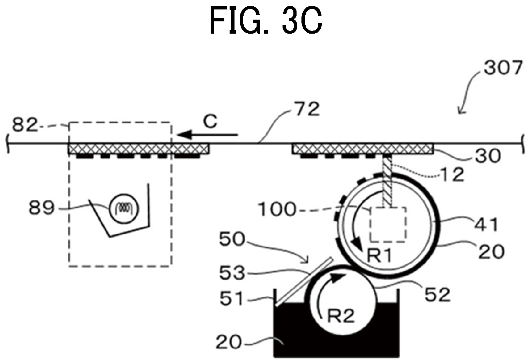

FIG. 3C is an explanatory diagram illustrating another example of the image forming apparatus illustrated in FIG. 2A to which a fixing means is added.

In FIG. 3C, an image forming apparatus 307 is obtained by changing the pressurizing-type fixing means 80 in the image forming apparatus 305 illustrated in FIG. 3A to a UV emission-type fixing means 82.

The fixing means 82 is disposed on a downstream side of the carrying roller 41 in the conveyance direction indicated by an arrow C in FIG. 3C of the target object 30, and includes a UV lamp 89. The fixing means 81 is used in a case where an ultraviolet curable material is used as the transfer layer 20, and emits UV by the UV lamp 89 to fix the transfer layer to the target object 30.

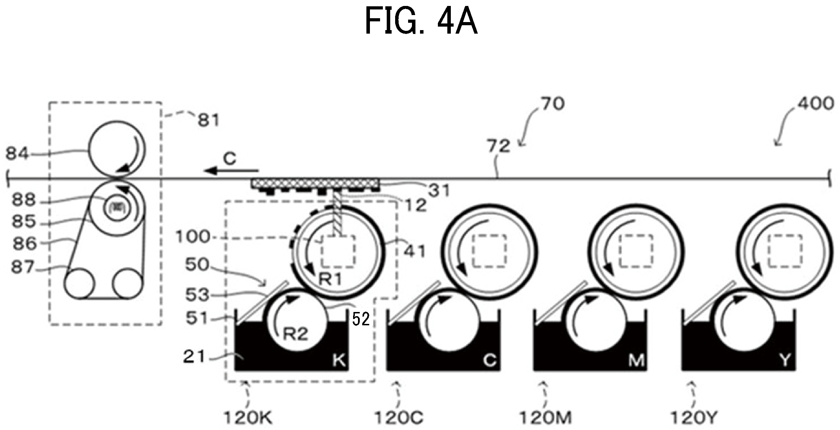

FIG. 4A is an explanatory diagram illustrating an example of the image forming apparatus according to one embodiment of the present embodiment.

In FIG. 4A, an image forming apparatus 400 includes four flying units 120 in addition to each means of the image forming apparatus 306 illustrated in FIG. 3B, and is changed to a case where a colorant 21 containing a coloring material is used as the transfer composition 20.

The flying unit 120 includes the supply means 50, a flying means 100, a beam scanning means 60, the carrying roller 41, and the transfer composition 20 (colorant 21).

Flying units 120Y, 120M, 120C, and 120K store toners of four colors of yellow (Y), magenta (M), cyan (C), and black (K), which are process colors, as the colorants 21.

As a result, it is possible to apply to a color process in which images of respective colors are sequentially formed on a recording medium 31 as the target object 30 to obtain a color image.

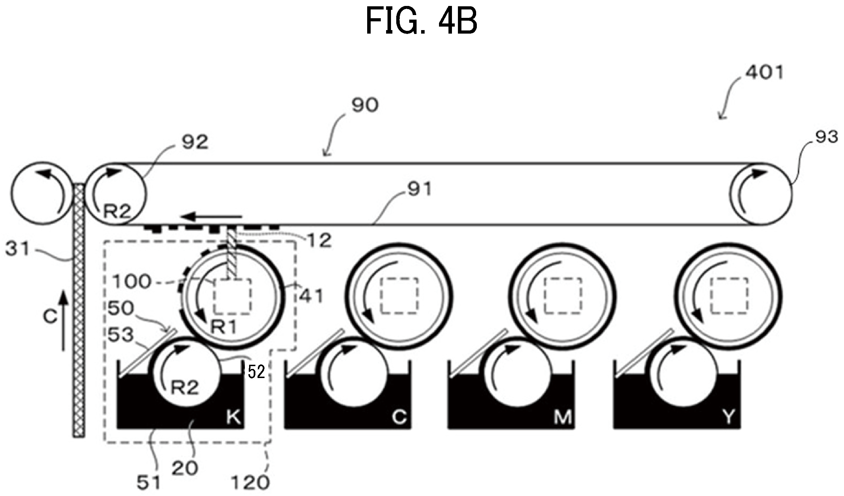

FIG. 4B is an explanatory diagram illustrating another example of the image forming apparatus according to one embodiment of the present embodiment.

In FIG. 4B, an image forming apparatus 401 includes an intermediate transfer means 90 as a target object, in addition to each means of the image forming apparatus 400 illustrated in FIG. 4A.

The intermediate transfer means 90 includes an intermediate transfer body 91, an intermediate transfer body driving roller 92, and an intermediate transfer body driven roller 93.

The intermediate transfer body 91 is, for example, an endless belt, disposed above the four flying units 120, and is stretched by the intermediate transfer body driving roller 92 and the intermediate transfer body driven roller 93.

The intermediate transfer body driving roller 92 is rotated in a rotation direction indicated by an arrow R2 in FIG. 4B by the rotation driving means to rotate the intermediate transfer body 91.

The intermediate transfer body driven roller 93 is driven in accordance with the rotation of the intermediate transfer body driving roller 92.

In this manner, first, an image may be formed on the intermediate transfer body 91, and the image may be transferred to a desired recording medium 31. In the image forming apparatus 201 also, a high-quality color image can be obtained similarly to the image forming apparatus 400. Since the image on the intermediate transfer body 91 is pressed by the intermediate transfer body driving roller 92 when being transferred to the recording medium 31, the face roughness of the recording medium 31 to which the colorant 21 is applied can be reduced similarly to the image forming apparatus 200.

In FIG. 1B, the emission direction of the laser beam is a gravity direction, but in FIGS. 1A and 2A to 4B, the emission direction of the laser beam is opposite to the gravity direction or horizontal.

In this manner, in the image forming method according to one embodiment of the present embodiment, the emission direction of the laser beam to the face of the substrate may be a non-gravity direction, and the liquid column or droplet may be generated in the non-gravity direction.

This can increase a degree of freedom in device design.

The image forming method and the image forming apparatus of one embodiment of the present embodiment can also be applied to a manufacturing method of a three-dimensional formed object and a manufacturing apparatus of a three-dimensional formed object as follows.

### Manufacturing Method of Three-Dimensional Formed Object

A manufacturing method of a three-dimensional formed object of one embodiment of the present embodiment includes a step including the image forming method of one embodiment of the present embodiment, and further includes other steps as necessary. Specifically, the method includes a flying step and a transfer step, and further includes other steps as necessary.

The flying step is similar to the flying step in the image forming method of one embodiment of the present embodiment.

In the flying step in the manufacturing method of a three-dimensional formed object, a transfer composition as a three-dimensional forming agent is stacked as a layer on a target object and three-dimensionally applied.

### Three-Dimensional Forming Agent

Similarly to the transfer composition, the shape and material of the three-dimensional forming agent are not particularly limited, and can be appropriately selected according to a purpose. Hereinafter, a difference in the three-dimensional forming agent as the transfer composition in the manufacturing method of a three-dimensional formed object will be described.

An average thickness per layer of the three-dimensional forming agent applied onto the target object is not particularly limited and can be appropriately selected according to a purpose, and varies depending on desirable accuracy, but is preferably 5 µm or more and 500 µm or less. When the average thickness per layer of the three-dimensional forming agent applied onto the target object is 5 µm or more and 500 µm or less, it is advantageous in terms of accuracy, texture, smoothness, and manufacturing time of the three-dimensional formed object. The average thickness per layer of the three-dimensional forming agent applied onto the target object is more preferably 5 µm or more and 100 µm or less. When the average thickness per layer of the three-dimensional forming agent applied onto the target object is within a more preferable range, the energy of the laser beam can be suppressed low, and it is advantageous in terms of suppressing deterioration in three-dimensional forming agent.

The three-dimensional forming agent contains at least a curable material, and further contains other components as necessary.

### Curable Material

The curable material is not particularly limited as long as this is a compound that causes a polymerization reaction by emission of an active energy ray (ultraviolet ray and electron beam) and heating to cure, and can be appropriately selected according to a purpose, and examples thereof include an active energy ray curable compound and a thermosetting compound. Among them, a material that is a liquid at normal temperature is preferable.

The active energy ray curable compound is a relatively low-viscosity monomer having a radically polymerizable unsaturated double bond in the molecular structure, and examples thereof include a monofunctional monomer and a polyfunctional monomer.

### Other Components

Other components are not particularly limited, and can be appropriately selected according to the purpose. Examples thereof include water, an organic solvent, a photopolymerization initiator, a surfactant, a colorant, a stabilizer, a water-soluble resin, a low-boiling alcohol, a face treatment agent, a viscosity modifier, an adhesiveness imparting agent, an antioxidant, an antiaging agent, a crosslinking accelerator, an ultraviolet absorber, a plasticizer, an antiseptic agent, and a dispersant.

### Other Steps and Other Means

Other steps are not particularly limited and can be appropriately selected according to a purpose, and examples thereof include a supply step, a three-dimensional forming head unit scanning step, a target object position adjusting step, and a control step.

### Curing Step and Curing Means

A curing step is a step of curing the three-dimensional forming agent as the transfer composition.

A curing means is a means of curing the three-dimensional forming agent as the transfer composition.

The curing means is not particularly limited, and can be appropriately selected according to a purpose. For example, when the three-dimensional forming agent is an ultraviolet curable material, an ultraviolet emitter can be exemplified.

The curing step is not particularly limited, and can be appropriately selected according to a purpose. For example, when the three-dimensional forming agent is an ultraviolet curable material, an ultraviolet emitting step can be exemplified, and can be suitably performed using an ultraviolet emitting means.

### Three-dimensional Forming Agent Supply Step and Three-dimensional Forming Agent Supply Means

Since the three-dimensional forming agent supply step is similar to the supply step in the image forming method of one embodiment of the present embodiment except that the transfer composition is a three-dimensional forming agent, the description thereof will be omitted.

The supply means is similar to the supply means in the image forming apparatus of one embodiment of the present embodiment except that the transfer composition is a three-dimensional forming agent, so that the description thereof will be omitted.

### Three-dimensional Forming Head Unit Scanning Step and Three-dimensional Forming Head Unit Scanning Means

A three-dimensional forming head unit scanning step is a step of scanning the three-dimensional forming head unit obtained by integrating the flying unit and the curing means in the width (X axis) direction of the device on the target object.

The three-dimensional forming head unit scanning means is a means that scans the three-dimensional forming head unit obtained by integrating the flying unit and the curing means in the width (X axis) direction of the device on the target object.

A plurality of three-dimensional forming head units may be provided.

### Target object Position Adjusting Step and Target object Position Adjusting Means

A target object position adjusting step is a step of adjusting the position of the target object in a depth direction (Y axis) and a height direction (Z axis) of the device.

A target object position adjusting means is a means of adjusting the position of the target object in a depth direction (Y axis) and a height direction (Z axis) of the device.

Examples of the target object position adjusting means include a base (stage) capable of adjusting the position of the target object in the depth direction (Y axis) and the height direction (Z axis) of the device.

### Control Step and Control Means

A control step is similar to the control step of the image forming apparatus described above.

A control means is similar to the control means of the image forming apparatus described above.

Next, an example of the manufacturing apparatus of a three-dimensional formed object will be described referring to the drawings.

The number, position, and shape of members of the manufacturing apparatus of a three-dimensional formed object are not limited to the number, position, and shape of the present embodiment, and can be set to a number, position, and shape preferable for carrying out one embodiment of the present embodiment.

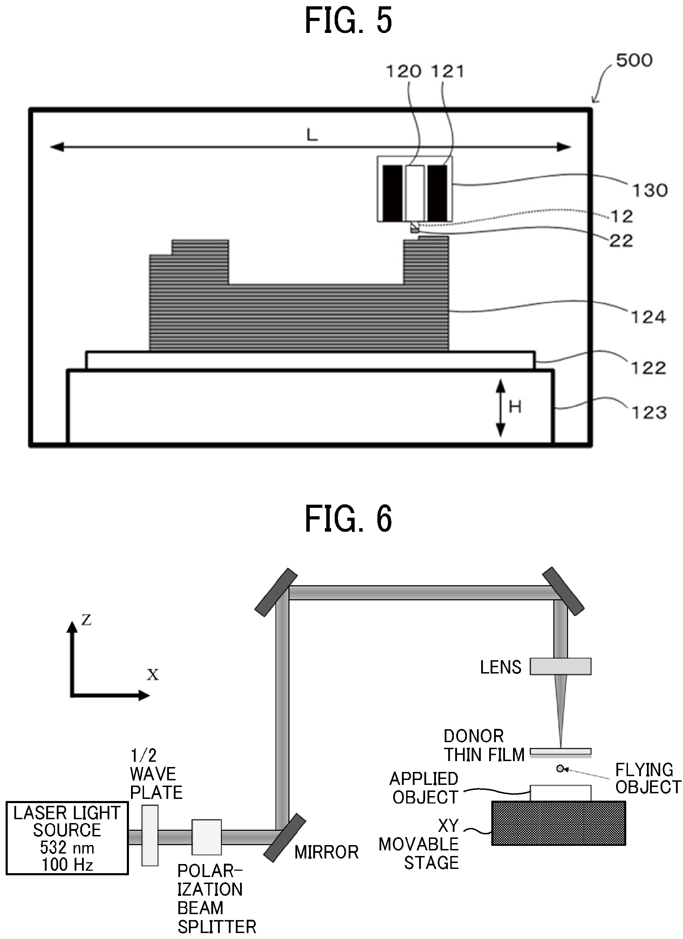

FIG. 5 is an explanatory diagram illustrating an example of the manufacturing apparatus of a three-dimensional formed object.

In FIG. 5, a manufacturing apparatus of a three-dimensional formed object 500 includes a formed object supporting substrate 122 as a target object, a stage 123, and a three-dimensional forming head unit 130. The manufacturing apparatus of a three-dimensional formed object 500 manufactures a three-dimensional formed object 124 by stacking the applied three-dimensional forming agent 22 while curing.

The three-dimensional forming head unit 130 is disposed in an upper portion of the manufacturing apparatus of a three-dimensional formed object 500, and can scan in a direction indicated by an arrow L in FIG. 5 by a driving means. The three-dimensional forming head unit 130 includes a flying unit 120 and an ultraviolet emitter 121 as a curing means.

The flying unit 120 is disposed at the center of the three-dimensional forming head unit 130, causes the transfer composition 20 to fly downward, and applies the same to the formed object supporting substrate 122 or the already cured transfer layer 20.

The ultraviolet emitter 121 is disposed on each of both side faces of the flying unit 120, and irradiates the transfer composition 20 caused to fly by the flying unit 120 with ultraviolet rays to cure the transfer layer 20.

The formed object supporting substrate 122 is disposed in a lower portion of the manufacturing apparatus of a three-dimensional formed object 500, and serves as a substrate when the three-dimensional forming head unit 130 forms a layer of the three-dimensional forming agent 22.

The stage 123 is arranged below the formed object supporting substrate 122, and can move the formed object supporting substrate 122 in the vertical direction in FIG. 9 by a driving means. The stage 123 can be moved in a direction indicated by an arrow H in FIG. 9, and can adjust a gap between the three-dimensional forming head unit 130 and the three-dimensional formed object 124.

In the image forming apparatus and the manufacturing apparatus of a three-dimensional formed object, an example of conveying or moving the target object (recording medium) has been described, but the present invention is not limited thereto, and the target object may be stopped and the flying unit may be moved. Alternatively, both the target object and the flying unit may be moved.

In a case where images of an entire face of the target object are simultaneously formed, it is possible that both are stationary at least at the time of recording, and only laser is operated.

### Examples

Hereinafter, examples of one embodiment of the present embodiment will be described, but the present embodiment is not limited to these examples at all.

### Example of Manufacturing Donor 1

By mixing materials described in the following Composition of Donor 1, and adjusting the mixture while stirring so that complex viscosity was 4 mPa·s, a donor 1 (hereinafter, also referred to as "transfer composition 1") was prepared. UV CORE TYPE-A yellow is a material that does not absorb light having a wavelength of 532 nm. T-77 is a material that absorbs light having a wavelength of 532 nm and is decomposed or volatilized at the sintering step.

### Composition of Donor 1

·UV CORE TYPE-A yellow (T&K TOKA Corporation): 75.0 parts by mass
·T-77 (Hodogaya Chemical Co., Ltd., ammonium salt): 0.1 parts by mass
·UV DG Reducer (T&K TOKA Corporation): 24.9 parts by mass

### Example of Manufacturing Donor 2

A donor 2 (hereinafter, also referred to as a "transfer composition 2") was prepared in a manner similar to that in the example of manufacturing the donor 1 except that Composition of Donor 1 in the example of manufacturing the donor 1 was changed to the following Composition of Donor 2.

### Composition of Donor 2

·UV CORE TYPE-A yellow (T&K TOKA Corporation): 75.0 parts by mass
·T-77 (Hodogaya Chemical Co., Ltd., ammonium salt): 0.05 parts by mass
·UV DG Reducer (T&K TOKA Corporation): 24.95 parts by mass

### Example of Manufacturing Donor 3

A donor 3 (hereinafter, also referred to as a "transfer composition 3") was prepared in a manner similar to that in the example of manufacturing the donor 1 except that Composition of Donor 1 in the example of manufacturing the donor 1 was changed to the following Composition of Donor 3.

### Composition of Donor 3

·UV CORE TYPE-A yellow (T&K TOKA Corporation): 75.0 parts by mass
·T-77 (Hodogaya Chemical Co., Ltd., ammonium salt): 0.2 parts by mass
·UV DG Reducer (T&K TOKA Corporation): 24.8 parts by mass

### Example of Manufacturing Donor 4

A donor 4 (hereinafter, also referred to as a "transfer composition 4") was prepared in a manner similar to that in the example of manufacturing the donor 1 except that Composition of Donor 1 in the example of manufacturing the donor 1 was changed to the following Composition of Donor 4.

### Composition of Donor 4

·UV CORE TYPE-A yellow (T&K TOKA Corporation): 75.0 parts by mass
·T-77 (Hodogaya Chemical Co., Ltd., ammonium salt): 0.3 parts by mass
·UV DG Reducer (T&K TOKA Corporation): 24.7 parts by mass

### Example of Manufacturing Donor 5

A donor 5 (hereinafter, also referred to as a "transfer composition 5") was prepared in a manner similar to that in the example of manufacturing the donor 1 except that Composition of Donor 1 in the example of manufacturing the donor 1 was changed to the following Composition of Donor 5.

### Composition of Donor 5

·UV CORE TYPE-A yellow (T&K TOKA Corporation): 75.0 parts by mass
·#44 (Mitsubishi Chemical Group Corporation, carbon black): 0.1 parts by mass
·UV DG Reducer (T&K TOKA Corporation): 24.9 parts by mass

### Example of Manufacturing Donor 6

A donor 6 (hereinafter, also referred to as a "transfer composition 6") was prepared in a manner similar to that in the example of manufacturing the donor 1 except that Composition of Donor 1 in the example of manufacturing the donor 1 was changed to the following Composition of Donor 6.

### Composition of Donor 6

·UV CORE TYPE-A yellow (T&K TOKA Corporation): 90.0 parts by mass
·#44 (Mitsubishi Chemical Group Corporation, carbon black): 0.1 parts by mass
·UV DG Reducer (T&K TOKA Corporation): 9.9 parts by mass

### Example of Manufacturing Donor 7

A donor 7 (hereinafter, also referred to as a "transfer composition 7") was prepared in a manner similar to that in the example of manufacturing the donor 1 except that Composition of Donor 1 in the example of manufacturing the donor 1 was changed to the following Composition of Donor 7.

### Composition of Donor 7

·UV CORE TYPE-A yellow (T&K TOKA Corporation): 75.0 parts by mass
·UV DG Reducer (T&K TOKA Corporation): 25.0 parts by mass

### Example of Manufacturing Donor 8

A donor 8 (hereinafter, also referred to as a "transfer composition 8") was prepared in a manner similar to that in the example of manufacturing the donor 1 except that Composition of Donor 1 in the example of manufacturing the donor 1 was changed to the following Composition of Donor 8. M001 is a material that absorbs light having a wavelength of 532 nm, but is not decomposed or volatilized at the sintering step.

### Composition of Donor 8

·UV CORE TYPE-A yellow (T&K TOKA Corporation): 75.0 parts by mass
·M001 (magnetic nanoparticle, manufactured by Powdertech Co., Ltd.): 0.1 parts by mass
·UV DG Reducer (T&K TOKA Corporation): 24.9 parts by mass

Next, for the prepared donor (transfer composition), the complex viscosity at a shear stress of 200 Pa at 25°C was measured as follows.

### Measurement of Complex Viscosity at Shear Stress of 200 Pa at 25°C

The complex viscosity was measured on the basis of the following conditions by a stress control method in which an applied stress was changed and a strain amount generated at that time was measured using a dynamic viscoelasticity measuring device.

### Measurement Conditions

·Device name: Rheometer, HAAKE RheoStress 600, manufactured by Thermo Fisher Scientific
·Temperature: 25°C
·Shear stress: 200 Pa

### Examples of Manufacturing Donor Thin Films 1 to 8

Next, each obtained donor (transfer composition) was applied onto one face of a slide glass (micro slide glass S7213, manufactured by Matsunami Glass Ind., Ltd.; transmittance of light having a wavelength of 532 nm is 99%) with a bar coater to prepare donor thin films 1 to 8 each having a transfer layer having an average thickness of 5 µm.

**[Table 1]**

| DONO R No. | DONO R THIN FILM No. | STATE | SPECIFIC WAVELENGTH ABSORBING MATERIAL (SPECIFIC WAVELENGTH: 532 nm) | DECOMPOSITION/ VOLATILIZATION TEMPERATURE OF WAVELENGTH-SELECTIV E ABSORBING MATERIAL (°C) | CONTENT OF WAVELENGTH-SELECTIV E ABSORBING MATERIAL (MASS%) | COMPLEX VISCOSIT Y (mPa·s) |
|---|---|---|---|---|---|---|
| DONO R 1 | DONO R THIN FILM No. 1 | SOLUTIO N | T77 (AMMONIUM SALT) | 300 | 0.1 | 4 |
| DONO R 2 | DONO R THIN FILM No. 2 | SOLUTIO N | T77 (AMMONIUM SALT) | 300 | 0.05 | 4 |
| DONO R3 | DONO R THIN FILM No. 3 | SOLUTIO N | T77 (AMMONIUM SALT) | 300 | 0.2 | 4 |
| DONO R 4 | DONO R THIN FILM No. 4 | SOLUTIO N | T77 (AMMONIUM SALT) | 300 | 0.3 | 4 |
| DONO R 5 | DONO R THIN FILM No. 5 | SOLUTIO N | #44 (CARBON BLACK) | 700 | 0.1 | 4 |
| DONO R 6 | DONO R THIN FILM No. 6 | SOLUTIO N | T77 (AMMONIUM SALT) | 300 | 0.1 | 20 |
| DONO R 7 | DONO R THIN FILM No. 7 | SOLUTIO N | - | - | - | 4 |
| DONO R8 | DONO R THIN FILM No. 8 | SOLUTIO N | M001 (MAGNETIC NANOPARTICLE ) | | 0.1 | 4 |

In Table 1, "Poor" indicates that a material is not decomposed or volatilized at the sintering step.

### Examples 1 to 7 and Comparative Examples 1 to 3

### Flying Step

In Examples 1 to 7 and Comparative Examples 1 to 3, a Q-switched laser (EXPLORER-ONE-532-200S-KE, Spectra-Physics, Inc.) having a wavelength of 532 nm was used as a laser light source to irradiate each donor thin film illustrated in Table 2 below. FIG. 6 illustrates a schematic view of a laser emission apparatus having an optical vortex laser beam used in Examples 1 to 7 and Comparative Examples 1 to 3. In the laser emission apparatus, energy adjustment is performed by a 1/2 wave plate and a polarization beam splitter. The laser was flipped upward with a mirror, then struck down, and condensed with a lens, thereby irradiating the donor thin film as illustrated in Table 2.

### Transfer Step

The droplet of the transfer composition caused to fly was transferred onto a mullite combustion boat (Suzuki Scientific Instruments, Inc.) disposed on an XY movable stage.

### Sintering Step

The transfer composition after transfer was sintered by a muffle furnace (electric furnace) or laser emission as illustrated in Table 2. In Example 7, since laser emission was used as a sintering means, sintering temperature is denoted as "-". In Comparative Example 1, since the donor thin film 7 does not contain a wavelength-selective absorbing material, transfer cannot be performed, and sintering is not performed, so that the sintering temperature is denoted as "-". In Comparative Example 3, since sintering was not performed, it is denoted as "-".

**[Table 2]**

| | DONOR THIN FILM No. | SINTERING STEP | |
|---|---|---|---|
| | | SINTERING MEANS | SINTERING TEMPERATURE (°C) |
| EXAMPLE 1 | DONOR THIN FILM 1 | ELECTRIC FURNACE | 400 |
| EXAMPLE 2 | DONOR THIN FILM 2 | ELECTRIC FURNACE | 500 |
| EXAMPLE 3 | DONOR THIN FILM 3 | ELECTRIC FURNACE | 500 |
| EXAMPLE 4 | DONOR THIN FILM 4 | ELECTRIC FURNACE | 500 |
| EXAMPLE 5 | DONOR THIN FILM 5 | ELECTRIC FURNACE | 800 |
| EXAMPLE 6 | DONOR THIN FILM 6 | ELECTRIC FURNACE | 500 |
| EXAMPLE 7 | DONOR THIN FILM 1 | LASER EMISSION | - |
| COMPARATIVE EXAMPLE 1 | DONOR THIN FILM 7 | ELECTRIC FURNACE | - |
| COMPARATIVE | DONOR THIN FILM 8 | ELECTRIC | 500 |
| EXAMPLE 2 | | FURNACE | |
| COMPARATIVE EXAMPLE 3 | DONOR THIN FILM 1 | ELECTRIC FURNACE | - |

### Possibility of Transfer

Possibility of transfer of the donor thin film was evaluated according to the following criteria by visually confirming the formed image. Results are illustrated in Table 3.

### Evaluation Criteria

Very good: Ink is visible
Poor: Ink is not visible.

### Appearance of Image after Sintering

The appearance of the image after sintering was compared with the appearance of the sintered formed image and the appearance of an image (reference) obtained by sintering ink containing no wavelength-selective absorbing material, and was evaluated according to the following criteria. In Comparative Example 1, since transfer cannot be performed and the evaluation is not performed, it is denoted as "-".

### Evaluation Criteria

Very good: No difference
Good: A color of the wavelength-selective absorbing material can be slightly recognized, but a color of the reference remains excellently.
Fair: The color of the wavelength-selective absorbing material remains to some extent, and the color of the reference appears to be slightly not clear.
Poor: The color of the wavelength-selective absorbing material clearly remains, and the color of the reference cannot be identified.

### Dust of Transfer Dot

A dust of a transfer dot was evaluated according to the following criteria by visually confirming the sintered formed image and visually confirming the presence or absence of ink dust around the image. In Comparative Example 1, since transfer cannot be performed and the evaluation is not performed, it is denoted as "-".

### Evaluation Criteria

Very good: No dust can be recognized.
Good: Slight dust can be recognized like a shadow
Poor: The dust can be clearly recognized.

**[Table 3]**

| | EVALUATION RESULT | | |
|---|---|---|---|
| | POSSIBILITY OF | APPEARANCE OF IMAGE AFTER | DUST OF |
| | TRANSFER | SINTERING | TRANSFER DOT |
| EXAMPLE 1 | VERY GOOD | VERY GOOD | VERY GOOD |
| EXAMPLE 2 | VERY GOOD | VERY GOOD | VERY GOOD |
| EXAMPLE 3 | VERY GOOD | GOOD | VERY GOOD |
| EXAMPLE 4 | VERY GOOD | FAIR | VERY GOOD |
| EXAMPLE 5 | VERY GOOD | GOOD | VERY GOOD |
| EXAMPLE 6 | VERY GOOD | VERY GOOD | GOOD |
| EXAMPLE 7 | VERY GOOD | VERY GOOD | VERY GOOD |
| COMPARATIVE EXAMPLE 1 | POOR | - | - |
| COMPARATIVE EXAMPLE 2 | VERY GOOD | POOR | VERY GOOD |
| COMPARATIVE EXAMPLE 3 | VERY GOOD | POOR | POOR |

From the above results, even a material that is not absorbed at least at a specific wavelength and cannot be transferred by normal laser-induced forward transfer can be transferred by adding a wavelength-selective absorbing material, and an image can be formed by decomposing and volatilizing the wavelength-selective absorbing material at the sintering step.

An image forming method includes: applying a transfer composition (20) on a first face of a transparent substrate (40), the transfer composition (20) including: a wavelength-selective absorbing material configured to absorb light having a specific wavelength; a wavelength-selective non-absorbing material configured not to absorb the light having a specific wavelength; and a dispersion medium; irradiating, a second face opposite the first face of the transparent substrate (40), with the light (12) having the specific wavelength, to propel the transfer composition (20) from the transparent substrate (40) toward a target object (30), and to transfer the transfer composition (20) onto the target object (30); and sintering the transfer composition (20) on the target object (30), to decompose or volatilize the wavelength-selective absorbing material and the dispersion medium in the transfer composition (20), and to form, on the target object (30), an image including the wavelength-selective non-absorbing material.

The applying applies, on the first face of the transparent substrate (40), the transfer composition (20) including the wavelength-selective absorbing material in an amount of 0.2 mass% or less with respect to a total amount of the transfer composition (20). The sintering sinters the transfer composition (20) including the wavelength-selective absorbing material having decomposition temperature or volatilization temperature of 1,000°C or lower.

The applying applies, on the first face of the transparent substrate (40), the transfer composition (20) to form a liquid thin film on the transparent substrate (40). The applying applies, on the first face of the transparent substrate (40), the transfer composition (20) having a complex viscosity of 1 mPa·s or more and 20,000 mPa·s or less.

The applying applies, on the first face of the transparent substrate (40), the transfer composition (20) including the wavelength-selective absorbing material including at least one of ammonium salt and carbon black, and the sintering sinters the transfer composition (20) including the wavelength-selective absorbing material having the decomposition temperature or the volatilization temperature lower than 500°C. The sintering uses an electric furnace or laser emission to sinter the transfer composition (20) on the target object (30).

An image forming apparatus includes: a transparent substrate (40) having: a first face on which a transfer composition (20) is applied, the transfer composition (20) including: a wavelength-selective absorbing material configured to absorb light having a specific wavelength; a wavelength-selective non-absorbing material configured not to absorb the light having a specific wavelength; and a dispersion medium; a second face opposite the first face; an irradiator (1) configured to irradiate, the second face of the transparent substrate (40), with the light (12) having the specific wavelength, to propel the transfer composition (20) from the transparent substrate (40) toward a target object (30), and to transfer the transfer composition (20) onto the target object (30); and sintering device configured to sinter the transfer composition (20) on the target object (30), to decompose or volatilize the wavelength-selective absorbing material and the dispersion medium in the transfer composition (20), and to form, on the target object (30), an image including the wavelength-selective non-absorbing material.

Aspects of the present embodiment are, for example, as follows.

According to Aspect 1, an image forming method includes irradiating a face of a transparent substrate on a side opposite to a side on which a transfer composition is disposed with light having a specific wavelength in the transparent substrate on a face of which the transfer composition containing a wavelength-selective absorbing material that absorbs light having a specific wavelength, a wavelength-selective non-absorbing material that does not absorb the light having a specific wavelength, and a dispersion medium is disposed to cause the transfer composition to fly and transfer the transfer composition to an target object; and
sintering the transferred transfer composition, and decomposing or volatilizing the wavelength-selective absorbing material and the dispersion medium to form an image containing the wavelength-selective non-absorbing material.

According to Aspect 2, in the image forming method of Aspect 1, a content of the wavelength-selective absorbing material is 0.2 mass% or less with respect to a total amount of the transfer composition.

According to Aspect 3, in the image forming method of Aspect 1 or 2, decomposition temperature or volatilization temperature of the wavelength-selective absorbing material is 1,000°C or lower.

According to Aspect 4, in the image forming method of any one of Aspects 1 to 3, the transfer composition disposed on the face of the transparent substrate is a liquid thin film.

According to Aspect 5, in the image forming method of any one of Aspects 1 to 4, complex viscosity of the transfer composition is 1 mPa·s or more and 20,000 mPa·s or less.

According to Aspect 6, in the image forming method of any one of Aspects 1 to 5, the wavelength-selective absorbing material is at least one of ammonium salt and carbon black, and the decomposition temperature or the volatilization temperature of the wavelength-selective absorbing material is lower than 500°C.

According to Aspect 7, in the image forming method of any one of Aspects 1 to 6, the transferred transfer composition is sintered by an electric furnace or laser emission.

According to Aspect 8, an image forming apparatus includes a means of irradiating a face of a transparent substrate on a side opposite to a side on which a transfer composition is disposed with light having a specific wavelength in the transparent substrate on a face of which the transfer composition containing a wavelength-selective absorbing material that absorbs light having a specific wavelength, a wavelength-selective non-absorbing material that does not absorb the light having a specific wavelength, and a dispersion medium is disposed to cause the transfer composition to fly and transfer the transfer composition to an target object; and
a means of sintering the transferred transfer composition, and decomposing or volatilizing the wavelength-selective absorbing material and the dispersion medium to form an image containing the wavelength-selective non-absorbing material.

According to the image forming method of any one of Aspects 1 to 7 and the image forming apparatus of Aspect 8, various disadvantages in the related art can be solved, and an object of one embodiment of the present embodiment can be achieved.

## Claims

1. An image forming method comprising:
applying a transfer composition (20) on a first face of a transparent substrate (40),
the transfer composition (20) including:
a wavelength-selective absorbing material configured to absorb light having a specific wavelength;
a wavelength-selective non-absorbing material configured not to absorb the light having a specific wavelength; and
a dispersion medium;
irradiating, a second face opposite the first face of the transparent substrate (40), with the light (12) having the specific wavelength,
to propel the transfer composition (20) from the transparent substrate (40) toward a target object (30), and
to transfer the transfer composition (20) onto the target object (30); and sintering the transfer composition (20) on the target object (30),
to decompose or volatilize the wavelength-selective absorbing material and the dispersion medium in the transfer composition (20), and
to form, on the target object (30), an image including the wavelength-selective non-absorbing material.

2. The image forming method according to claim 1,
wherein the applying applies, on the first face of the transparent substrate (40), the transfer composition (20) including the wavelength-selective absorbing material in an amount of 0.2 mass% or less with respect to a total amount of the transfer composition (20).

3. The image forming method according to claim 1 or 2,
wherein the sintering sinters the transfer composition (20) including the wavelength-selective absorbing material having decomposition temperature or volatilization temperature of 1,000°C or lower.

4. The image forming method according to any one of claims 1 to 3,
wherein the applying applies, on the first face of the transparent substrate (40), the transfer composition (20) to form a liquid thin film on the transparent substrate (40).

5. The image forming method according to any one of claims 1 to 4,
wherein the applying applies, on the first face of the transparent substrate (40), the transfer composition (20) having a complex viscosity of 1 mPa·s or more and 20,000 mPa·s or less.

6. The image forming method according to any one of claims 1 to 5,
wherein the applying applies, on the first face of the transparent substrate (40), the transfer composition (20) including the wavelength-selective absorbing material including at least one of ammonium salt and carbon black, and
the sintering sinters the transfer composition (20) including the wavelength-selective absorbing material having decomposition temperature or volatilization temperature lower than 500°C.

7. The image forming method according to any one of claims 1 to 6,
wherein the sintering uses an electric furnace or laser emission to sinter the transfer composition (20) on the target object (30).

8. An image forming apparatus comprising:
a transparent substrate (40) having:
a first face on which a transfer composition (20) is applied,
the transfer composition (20) including:
a wavelength-selective absorbing material configured to absorb light having a specific wavelength;
a wavelength-selective non-absorbing material configured not to absorb the light having a specific wavelength; and
a dispersion medium;
a second face opposite the first face;
an irradiator (1) configured to irradiate, the second face of the transparent substrate (40), with the light (12) having the specific wavelength,
to propel the transfer composition (20) from the transparent substrate (40) toward a target object (30), and
to transfer the transfer composition (20) onto the target object (30); and
sintering device configured to sinter the transfer composition (20) on the target object (30),
to decompose or volatilize the wavelength-selective absorbing material and the dispersion medium in the transfer composition (20), and
to form, on the target object (30), an image including the wavelength-selective non-absorbing material.
